# FASCICULE DE BREVET EUROPEEN

(11) **EP 4 602 673 B1**
(45) Date de publication et mention de la délivrance du brevet: **25.02.2026**
(21) Numéro de dépôt: 24837120.5
(22) Date de dépôt: 04.12.2024
(51) Int. Cl.: H01M 10/613, H01M 10/653, H01M 10/6551, H01M 10/6554, H01M 10/625, H01M 10/647

(54) **DISPOSITIF DE REFROIDISSEMENT POUR CELLULE EN SACHET DE BATTERIE ÉLECTRIQUE**
KÜHLVORRICHTUNG FÜR EINE POUCHZELLE EINER ELEKTRISCHEN BATTERIE
COOLING DEVICE FOR AN ELECTRIC-BATTERY POUCH CELL

(30) Priorité: 05.12.2023 FR 2313578
(43) Date de publication de la demande: 20.08.2025
(73) Titulaire: Verkor, 38000 Grenoble (FR)
(72) Inventeur: MARES-MANTON, Jordan Alexander, 38000 Grenoble (FR); BENSAAD, Selma, 38000 Grenoble (FR)
(74) Mandataire: Novagraaf Group
(86) Numéro de dépôt international: PCT/IB2024/062210
(87) Numéro de publication internationale: WO 2025/120538

(56) Documents cités:
- JP-A- 2008 159 440
- JP-B2- 5 256 324
- JP-B2- 6 693 480
- KR-A- 20210 065 268

## Description

### Domaine technique de l'invention

La présente description se rapporte au domaine du stockage d'énergie. La présente invention concerne un dispositif de refroidissement de cellules en sachet. L'invention concerne un module comprenant un tel dispositif de refroidissement ainsi qu'une batterie de véhicule électrique comprenant un tel module. L'invention concerne aussi un procédé de fabrication d'un tel dispositif de refroidissement.

### Etat de la technique

Dans de nombreux secteurs industriels, par exemple dans le domaine des véhicules électriques, il est connu de concevoir des systèmes de stockage d'énergie pour alimenter diverses applications, en particulier les moteurs de ces véhicules électriques. Un obstacle fréquemment rencontré par ces systèmes réside dans la difficulté de gérer efficacement la chaleur générée par ces modules lors des cycles de charge et de décharge des cellules que comprennent ces modules. Un autre obstacle se situe dans la nécessité de maintenir les cellules de batterie dans une plage de température idéale pour un fonctionnement optimal. En effet, une cellule soumise à des températures trop basses ne fonctionnera pas correctement. Des températures trop élevées peuvent altérer les performances des cellules, voire conduire à la destruction de celles-ci. Une évacuation de la chaleur est donc un besoin recherché, ainsi que des solutions de protection contre des conditions de froid intense.

Les cycles de charges et de décharges génèrent de la chaleur. La chaleur se propage à travers les électrodes. Une température trop importante peut endommager le module et la cellule elle-même. La chaleur est générée à la fois par les connexions électriques et par la cellule elle-même. Cette combinaison de sources de chaleur souligne l'importance de réguler la température des connexions électrique et de la cellule. Des températures élevées sont une menace potentielle pour la cellule.

Pour traiter ce problème, il est connu des techniques de refroidissement des modules de batteries, telles que la circulation de liquides de refroidissement à travers des canaux spécialement conçus dans les blocs-batteries. Ces techniques permettent de maintenir la température des cellules à un niveau acceptable, contribuant ainsi à la sécurité et à la durabilité des batteries pour véhicules électriques. Le document KR 2021 0065268 A décrit un dispositif de refroidissement destiné à dissiper la chaleur concentrée au niveau d'un busbar reliant les languettes d'électrode des cellules électriques de type Pouch d'un module de batterie.

Cependant, les dispositifs connus présentent de nombreux désavantages. Tout d'abord, leur utilisation pour réduire le chauffage des électrodes des cellules de modules de batteries électrique conduit à une consommation d'énergie souvent élevée, et par ailleurs complexe à mettre en œuvre de par le volume important occupé par ceux-ci. Ceci augmente aussi le coût global de la fabrication des batteries et des véhicules électriques. Par ailleurs, ces systèmes peuvent occuper un espace précieux à l'intérieur d'un bloc-batterie donné, réduisant ainsi la densité d'énergie de la batterie. Par ailleurs, les fuites de liquide de refroidissement peuvent entraîner des problèmes de sécurité et de pollution environnementale. D'autres techniques de refroidissement connues, par exemple, l'utilisation de systèmes de refroidissement par air, au moyen de ventilateurs ou de soufflantes, sont aussi connues mais présentent l'inconvénient d'être encombrantes, et moins efficaces pour dissiper de grandes quantités de chaleur ou pour maintenir les électrodes à des températures uniformes. Ces désavantages illustrent clairement les limites des techniques de refroidissement existantes.

Par conséquent, il existe un besoin de développer des solutions permettant d'améliorer la gestion efficace de la chaleur générée au sein de blocs-batteries et des modules de telles batteries électriques, sans les inconvénients des techniques traditionnelles.

### Objet de l'invention

Afin de répondre à ce ou à ces inconvénients, il est proposé selon un premier objet des présentes un dispositif de refroidissement pour au moins une cellule en sachet d'un module de batterie électrique, le dispositif de refroidissement comprenant une lame électriquement isolante et munie d'une pluralité de fentes, chaque fente étant conçue pour être traversée par une électrode respective de l'au moins une cellule en sachet, et une pluralité de brides métalliques, chaque bride métallique étant disposée entre deux fentes de la pluralité de fentes et comprenant, d'une part, une première surface adaptée pour être en contact avec l'électrode traversant la fente respective et, d'autre part, au moins une deuxième surface recouverte par un matériau d'interface thermique, le matériau d'interface thermique étant adapté pour relier thermiquement la deuxième surface de la bride métallique à au moins une plaque du module de batterie électrique, ladite plaque étant apte à être thermiquement régulée de façon active.

Dans les présentes, une régulation thermique active d'une plaque peut être mise en œuvre par un moyen apte à contrôler et/ou à maintenir de manière dynamique la température de cette plaque.

Ceci permet de fournir une solution efficace, économique et respectueuse de l'environnement pour maintenir la température des cellules de batterie à un niveau optimal.

Selon un mode de réalisation, la première surface de l'une au moins des brides métalliques est comprise entre 50 millimètres carrés et 2000 millimètres carrés et/ou dans lequel la deuxième surface de l'une au moins des brides métalliques est comprise entre 30 millimètres carrés et 2000 millimètres carrés

Ceci permet, dans le cas où la première surface de l'une au moins des brides métalliques est comprise entre 50 millimètres carrés et 2000 millimètres carrés, de fournir une aire optimale pour le transfert thermique entre l'électrode et la bride. Dans le cas où la deuxième surface de l'une au moins des brides métalliques est comprise entre 30 millimètres carrés et 2000 millimètres carrés, ceci permet de fournir une aire optimale pour le transfert thermique entre la bride et la plaque refroidie activement. Dans le cas où la première surface de l'une au moins des brides métalliques est comprise entre 50 millimètres carrés et 2000 millimètres carrés et où la deuxième surface de l'une au moins des brides métalliques est comprise entre 30 millimètres carrés et 2000 millimètres carrés, de fournir une combinaison d'aires optimales pour le transfert thermique entre l'électrode et la plaque refroidie activement.

Dans les présentes, une surface est équivalente à une aire, exprimée en millimètres carrés.

Selon un mode de réalisation, au moins l'une des brides métalliques présente une forme en L.

Ceci permet une liaison thermique optimale de la bride à une plaque horizontale, pour un refroidissement efficace par le dessus ou par le dessous.

Selon un autre mode de réalisation, au moins l'une des brides métalliques présente une forme en C.

Ceci permet une liaison thermique optimale de la bride à deux plaques horizontales, pour un refroidissement efficace par le dessus et par le dessous.

Selon un autre mode de réalisation, au moins l'une des brides métalliques présente une forme en U.

Ceci permet une liaison thermique optimale de la bride à une plaque verticale, pour un refroidissement efficace sur un côté.

Selon un mode de réalisation, la lame électriquement isolante est formée partiellement ou totalement d'un matériau choisi parmi du polypropylène, du polyéthylène, de la céramique, un polymère renforcé en fibre de verre, un matériau thermoplastique, un matériau composite thermoplastique, du polyamide, du polybutylène téréphtalate et/ou du polycarbonate acrylonitrile butadiène styrène.

Dans les présentes, du polyamide est noté « PA », du polybutylène téréphtalate est noté « PBT » et du polycarbonate acrylonitrile butadiène styrène est noté « PC-ABS ».

Du polypropylène fournit une résistance thermique adéquate pour résister aux températures de fonctionnement normales de cellules de modules pour une batterie électrique. Ceci fournit aussi une résistance optimale à l'humidité et une meilleure prévention des courts-circuits. L'utilisation de céramique, bien que fragiles, fournit une excellente résistance thermique, avec des températures plus élevées que les polymères, de l'ordre de 200°C. Des matériaux composites, par exemple un matériau comprenant un polymère renforcé en fibre de verre, permet des résistances thermique et mécanique élevées, avec des propriétés adaptables aux spécificités des cellules. Outre leur légèreté, leur flexibilité et leur résistance thermique adaptable, les matériaux composites thermoplastiques ont l'avantage de présenter une résistance accrue à la corrosion. Du PA permet une isolation électrique fiable tout en fournissant des résistances thermique et mécanique élevées. Outre ces avantages du PBT permet aussi une excellente stabilité dimensionnelle en cas d'exposition à des températures variables, tandis que du PC-ABS permet en outre de maintenir ses propriétés mécaniques et isolantes en supportant des températures allant au-delà de 60 °C.

Selon un mode de réalisation, le matériau d'interface thermique est choisi parmi un adhésif thermoconducteur sans silicone, un adhésif thermoconducteur comprenant du silicone, un adhésif comprenant une charge thermoconductrice, un mastic thermoconducteur sans silicone, un mastic thermoconducteur comprenant du silicone, un adhésif monocomposant à durcissement sans charge thermoconductrice, un adhésif bicomposant à durcissement sans charge thermoconductrice, un adhésif monocomposant à durcissement comprenant au moins une charge thermoconductrice, un adhésif bicomposant à durcissement comprenant au moins une charge thermoconductrice, un tampon thermoconducteur sans silicone et/ou un tampon thermoconducteur comprenant du silicone.

Ceci offre une conductivité thermique efficace, une adaptabilité à différents types de surfaces et des propriétés d'isolation électrique, assurant ainsi une gestion thermique optimale pour des composants électroniques tout en garantissant une application simplifiée.

Selon un mode de réalisation, au moins deux des fentes de la lame électriquement isolante comprennent chacune une ouverture de forme sensiblement rectangulaire, les au moins deux fentes étant parallèles l'une à l'autre.

Ceci permet d'optimiser le volume disponible pour connecter des électrodes.

Selon un deuxième objet des présentes, il est aussi proposé un module de batterie électrique comprenant le dispositif de refroidissement selon l'un quelconque des modes de réalisation précédents, le module de batterie électrique comprenant en outre l'au moins une cellule en sachet et l'au moins une plaque, dans lequel au moins une fente de la lame électriquement isolante est traversée par l'électrode respective de l'au moins une cellule en sachet, l'électrode respective étant en contact avec la première surface d'une bride métallique respective parmi la pluralité de brides métalliques, l'au moins une deuxième surface de la bride métallique respective étant recouverte par le matériau d'interface thermique, le matériau d'interface thermique reliant thermiquement la deuxième surface de la bride métallique respective à l'au moins une plaque, l'au moins une plaque étant apte à être thermiquement régulée de façon active.

Ceci permet à l'une des parois du module d'être participative dans le refroidissement actif des électrodes.

Selon un mode de réalisation possible, l'au moins une plaque est refroidie activement par liquide.

Ceci permet de réaliser une dissipation thermique efficace et uniforme au sein du module de batterie, améliorant la régulation thermique des cellules et des composants. Cette méthode active de refroidissement par liquide assure une gestion précise de la température, réduisant ainsi les risques de surchauffe et améliorant la durabilité ainsi que les performances des batteries électriques, tout en maintenant une efficacité énergétique optimale. Un refroidissement actif par liquide permet aussi de mieux gérer les pics de chaleur et maintenir des températures plus stables, contribuant à une durée de vie prolongée des batteries électriques.

Selon un mode de réalisation possible, la mise en contact de l'électrode respective avec la première surface de la bride métallique respective est mise en œuvre par un pliement de l'électrode respective autour d'une fente respective parmi l'au moins une fente de la lame électriquement isolante, le pli de l'électrode respective étant partiellement ou totalement ancrée sur la première surface de la bride métallique respective.

Ceci permet de maximiser l'aire de contact entre l'électrode et la bride métallique, tout en les maintenant solidaires l'un de l'autre en cas de vibrations ou de chocs.

Selon un troisième objet des présentes, il est aussi proposé une batterie électrique destinée à être intégrée dans un véhicule automobile électrique, ladite batterie électrique comprenant un module de batterie électrique selon l'une quelconque des modes de réalisation du premier objet des présentes et un système de régulation thermique connecté à l'au moins une plaque du module, ledit système de régulation thermique étant apte à modifier la température de ladite au moins plaque de sorte à réguler la température des cellules en sachet du module de batterie électrique.

Selon un mode de réalisation possible, la batterie électrique est choisie parmi une batterie lithium-ion, une batterie lithium polymère ou une batterie lithium fer phosphate.

Dans les présentes, une batterie lithium-ion est aussi appelée une batterie « Li-Ion », une batterie lithium polymère est aussi appelée une batterie « LiPo », et une batterie lithium fer phosphate est aussi appelée une batterie « LiFePO4 ».

Ceci fournit différentes solutions de stockage et de fourniture de l'énergie électrique pour diverses applications, renouvelables, et nécessitant une alimentation électrique efficace et fiable.

Selon un quatrième objet des présentes, il est aussi proposé un procédé de fabrication du dispositif selon l'un quelconque des modes de réalisation du premier objet des présentes, dans lequel la lame électriquement isolante est obtenue par un surmoulage mis en œuvre au moyen d'un moule d'injection plastique.

Ceci permet de simplifier le processus de fabrication en réduisant les risques d'erreur de montage de par un nombre trop grand de composants à assembler, ce qui réduit aussi les coûts de fabrication. Un surmoulage permet de former la pièce complète avant de l'insérer dans le module. Ceci permet aussi de pouvoir personnaliser la forme, les dimensions et le matériau de la lame en fonction des besoins de l'application, optimisant sa performance globale. Le plastique permet de fournir un isolant entre la plaque de refroidissement et la bride conductrice d'électricité après fabrication du dispositif.

Selon un mode de réalisation du quatrième objet des présentes, au moins l'une des brides métalliques est obtenue par un estampillage.

Ceci permet de faciliter et de rendre plus précis la fabrication du dispositif, puisque la bride métallique peut alors reposer directement sur le matériau d'interface thermique, le matériau d'interface thermique agissant comme un isolant électrique.

### Brève description des figures

D'autres caractéristiques, détails et avantages apparaîtront à la lecture de la description détaillée ci-après, et à l'analyse des dessins annexés, sur lesquels :
La [Fig 1] est une vue en perspective d'un dispositif de refroidissement et d'une cellule en sachet selon un mode de réalisation de l'invention.
La [Fig 2] est une vue du dessus d'un dispositif de refroidissement et d'une cellule en sachet selon un mode de réalisation de l'invention.
La [Fig 3] est une vue latérale d'un dispositif de refroidissement et d'une cellule en sachet selon un mode de réalisation de l'invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

### Description des modes de réalisation

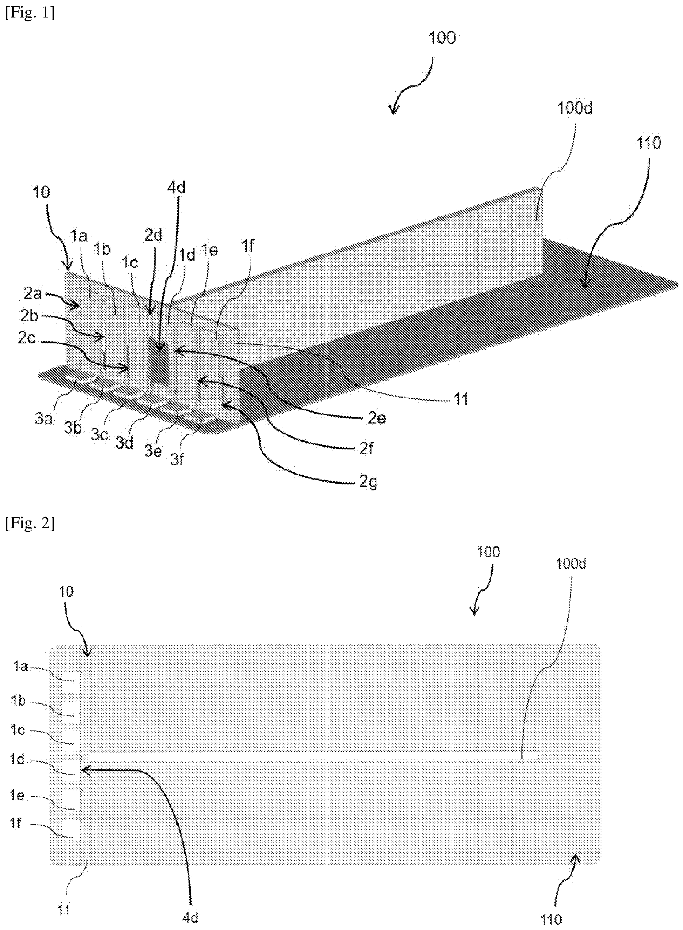

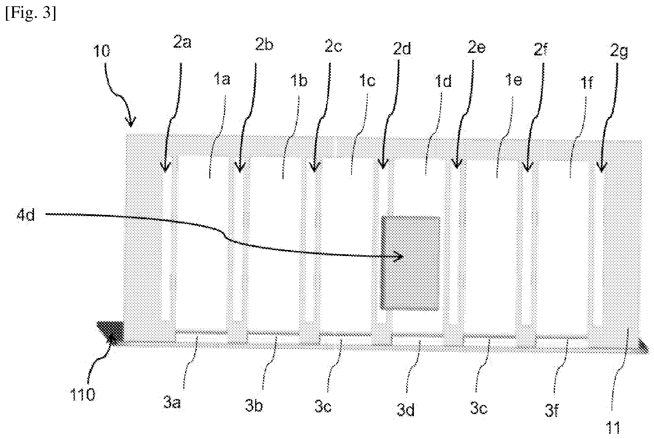

Un dispositif de refroidissement d'une cellule en sachet d'un module de batterie électrique selon un mode de réalisation de la présente invention, une telle cellule en sachet, un tel module de batterie électrique et une telle batterie électrique sont décrites en référence aux figures 1, 2 et 3.

Sur ces figures sont illustrés différents composants d'une batterie électrique destinée à être intégrée dans un véhicule électrique, cette batterie électrique fournissant l'origine chimique de l'énergie électrique utile à l'alimentation des éléments de ce véhicule électrique, dont le moteur de ce véhicule électrique. La batterie électrique comprend une pluralité de modules de batterie électrique, par exemple un module de batterie électrique 100, ces modules étant connectés entre eux.

Selon différents exemples, le module 100 est muni et/ou entouré de plaques, dont la plaque 110, appelée plaque inférieure 110, qui est connectable ou connectée à un système de régulation thermique (non représenté). En toute généralité, le module 100 comprend d'autres plaques qui l'entourent en le fermant. De manière non limitative, le module 100 comprend six plaques dont la plaque inférieure 110, formant par exemple un parallélépipède fermé.

Sur la plaque 110 et à l'intérieur du module de batterie électrique 100 se situe au moins une cellule en sachet 100d. De manière générale, le module 100 comprend une pluralité de cellules en sachet alignées, c'est-à-dire sensiblement parallèles l'une à l'autre dans la direction de leur plus grande dimension. Sur les dessins, seule la cellule 100d est représentée à des fins d'illustration.

Outre une maximisation de l'espace disponible dans le module 100 pour y insérer des composants dont les cellules en sachet, cette disposition permet aussi d'optimiser l'efficacité d'un système de régulation thermique connectable ou connecté aux plaques du module 100, notamment à la plaque 110, de sorte à réguler en même temps et de manière uniforme la température de toutes les cellules en sachet, dont la cellule 100d située sur la plaque 110.

Le module de batterie électrique 100 comprend en outre un dispositif de refroidissement 10 des cellules en sachet, ce dispositif étant formé d'une lame électriquement isolante 11. Cette lame électriquement isolante 11, qui est par exemple de forme rectangulaire, est munie d'une ou de plusieurs fentes traversantes et, dans l'exemple représenté, sept fentes 2a, 2b, 2c, 2d, 2e, 2f, 2g. De manière non limitative, ces fentes présentent une même forme, ici une forme rectangulaire, de sorte que les fentes 2a, 2b, 2c, 2d, 2e, 2f, 2g peuvent être réparties de manière régulière. Comme illustré, les fentes 2a, 2b, 2c, 2d, 2e, 2f, 2g sont par exemple alignées parallèlement l'une à l'autre dans une face de la lame électriquement isolante 11. Selon différentes variantes non représentées, ces fentes peuvent être de dimensions et d'orientations diverses, et peuvent aussi avoir des formes autres que rectangulaires, par exemple des trapèzes ou des trous circulaires.

Sur la lame électriquement isolante 11 sont disposées une ou plusieurs brides métalliques 1a, 1b, 1c, 1d, 1e, 1f, de préférence en même nombre que le nombre de cellules en sachet que comprend le module 100, chaque bride métallique étant disposée entre deux fentes respectives parmi la pluralité de fentes 2a, 2b, 2c, 2d, 2e, 2f, 2g. Cette disposition permet de mieux réguler la température des électrodes.

Bien qu'une seule cellule en sachet soit ici représentée, de manière générale, une pluralité de cellules en sachet est présente. De manière générale, chacune des fentes 2a, 2b, 2c, 2d, 2e, 2f, 2g de la lame électriquement isolante 11 a une forme et des dimensions adaptées pour permettre le passage d'une électrode d'une cellule en sachet respective du module 100. Des fentes rectangulaires réparties de manière régulières permettent ainsi le passage d'électrodes de cellules en sachet disposées de même manière dans le module 100 ou sur la plaque 110. Cet agencement permet d'optimiser le volume du dispositif de refroidissement. Il est ainsi possible d'alléger la masse du module.

De manière non limitative, chacune des fentes 2a, 2b, 2c, 2d, 2e, 2f, 2g est conçue pour être traversée par au moins une électrode respective d'une des cellules en sachet. Cette disposition en forme de « peigne » des fentes 2a, 2b, 2c, 2d, 2e, 2f, 2g de la ou des lames électriquement isolantes 11 du dispositif de refroidissement 10 permet de faire traverser celui-ci par une, plusieurs ou toutes les électrodes des cellules en sachet que peut comprendre un module de batterie 100 donné.

Chacune des brides métalliques, qui est par exemple formée de cuivre ou d'aluminium, présente une forme pliée et comprend deux surfaces. Ces deux surfaces sont situées de part et d'autre d'une bride métallique donnée. Comme illustré, une première de ces deux surfaces de la bride métallique 1d est adaptée pour être en contact avec l'électrode 4d de la cellule 100d, cette électrode 4d traversant la fente 2d respective. De l'autre côté de la même bride métallique 1d, une deuxième surface est prévue pour être en contact avec la plaque 110.

La deuxième surface d'au moins une bride métallique est recouverte par un matériau d'interface thermique 3d qui est adapté pour relier thermiquement cette deuxième surface de la bride métallique 1d à la plaque 110.La plaque 110 est apte à être thermiquement régulée de façon active. Le contact entre la deuxième surface de la bride métallique 1d avec la plaque 110 est indirect en ce que le matériau d'interface thermique 3d définit une couche séparant la bride métallique 1d et la plaque 110.

Cet effet du matériau d'interface thermique 3d de relier thermiquement la deuxième surface de la bride métallique 1d à la plaque 110, et donc la première surface de la bride métallique 1d prévue pour être en contact avec l'électrode 4d de la cellule 100d permet, lorsque l'électrode 4d est en contact avec la première surface, de créer un lien conducteur de chaleur entre les deux surfaces pour permettre un transfert efficace de la chaleur. L'utilisation d'un matériau spécifique placé entre chaque bride métallique et la plaque adaptée pour être refroidie de manière active dans un module de batterie permet d'assurer un refroidissement efficace, évitant ainsi une surchauffe de la batterie. Le matériau agit comme un conducteur thermique, transférant la chaleur de manière efficace pour maintenir une température optimale dans le module et dans la batterie.

De façon avantageuse, il a été observé que le choix de certaines valeurs des aires définissant la première surface et la deuxième surface des brides métalliques permettaient d'assurer un transfert thermique particulièrement efficace par le dispositif de refroidissement 10 utilisé pour une ou plusieurs cellules en sachet d'un module de batterie électrique. Lorsque la première surface de l'une au moins des brides métalliques est comprise entre 50 millimètres carrés et 2000 millimètres carrés, par exemple 100 ou 1000 millimètres carrés, on obtient une dissipation thermique optimale vers la plaque du module de batterie électrique. Lorsque la deuxième surface de l'une au moins des brides métalliques est comprise entre 30 millimètres carrés et 2000 millimètres carrés, par exemple entre 40 et 1500 millimètres carrés, on obtient une liaison thermique facilitée avec la plaque du module de batterie électrique et une bonne évacuation de la chaleur. En combinant ces choix de valeurs, d'une part pour la première surface et d'autre part pour la deuxième surface, par exemple une première surface de 70 millimètres carrés en contact avec l'électrode et une deuxième surface de 50 millimètres carrés recouverte d'un matériau d'interface thermique, assurant ainsi une double fonctionnalité de dissipation thermique, on obtient un équilibre idéal des deux transferts thermiques, assurant une dissipation thermique efficace de l'électrode vers la plaque refroidie activement.

De façon avantageuse et selon une réalisation possible, les brides métalliques 1a, 1b, 1c, 1d, 1e, 1f présentent une structure pliée ou courbée, par exemple en forme de L.

Dans les présentes, une bride métallique en forme de L ou en forme de « L » est une bride métallique qui présente une configuration angulaire où une première partie de la bride s'étend dans une première direction, dite horizontale, tandis qu'une deuxième partie se projette dans une deuxième direction, dite verticale et perpendiculaire à la direction horizontale, formant ainsi une structure en L. En particulier, cette structure en forme de L est telle que la première surface de la bride métallique correspondante est plus grande que la deuxième surface de cette même bride métallique. Dans le cas présent, la surface de contact possible entre la bride métallique 1d et l'électrode 4d est donc plus grande que la surface de contact possible entre la bride métallique 1d et matériau d'interface thermique 3d. Une bride en forme de « L » permet une liaison thermique optimale avec une plaque horizontale, favorisant un refroidissement efficace par le dessus ou par le dessous grâce à une configuration angulaire qui maximise la surface de contact avec la plaque.

De façon avantageuse et selon une réalisation possible, toutes les brides métalliques 1a, 1b, 1c, 1d, 1e, 1f ou une partie d'entre elles peuvent aussi être en forme de C. Dans les présentes, une bride métallique en forme de « C » est une bride métallique qui présente une configuration où une première partie de la bride s'étend dans une première direction, dite verticale, tandis que deux autres parties secondaires se projettent chacune depuis une extrémité de la première partie dans une deuxième direction, dite horizontale, et perpendiculaire à la première direction verticale, formant ainsi une bride ouverte vers l'extérieur et dont les deux parties secondaires sont parallèles entre elles, définissant une paire de deuxièmes surfaces parallèles correspondantes, sur lesquelles une paire de matériaux d'interface thermique peut être utilisée, voire des matériaux d'interface thermique différents.

Une bride en forme de « C » assure une liaison thermique optimale avec deux plaques horizontales, favorisant un refroidissement efficace au-dessus et en-dessous de la cellule en sachet, tout en exploitant les parties secondaires qui se projettent pour une meilleure dissipation de la chaleur.

De façon avantageuse et selon une réalisation possible, toutes les brides métalliques 1a, 1b, 1c, 1d, 1e, 1f ou une partie d'entre elles peuvent aussi être en forme de U. Dans les présentes, une bride métallique en forme de « U » est une bride métallique qui présente une configuration où une première partie de la bride s'étend dans une première direction, dite horizontale, tandis que deux autres parties secondaires se projettent chacune depuis une extrémité de la première partie dans une deuxième direction, dite verticale, et perpendiculaire à la première direction horizontale, formant ainsi une bride ouverte vers le haut et dont les deux parties secondaires sont parallèles entre elles. L'une des deux parties secondaires, verticale, est située sur la lame électriquement isolante 11 du dispositif de refroidissement 10, définissant une première surface correspondante à proximité d'une respective. La première partie, horizontale, et l'autre partie secondaire, verticale, définissent dans ce cas une paire de deuxièmes surfaces correspondantes et transverses l'une à l'autre, sur lesquelles une paire de matériaux d'interface thermique peut être utilisée, voire des matériaux d'interface thermique différents.

Une bride en forme de « U » offre une liaison thermique optimale avec une plaque verticale et une plaque horizontale, permettant un refroidissement au moyen de deux plaques transverses l'une à l'autre, grâce à ces parties secondaires transverses entre elles, favorisant ainsi une dissipation de chaleur efficace.

Selon une réalisation possible, différents matériaux peuvent être utilisés pour former la lame électriquement isolante 11 du dispositif de refroidissement 10. De façon avantageuse, il a été observé que le choix de polyamide, noté « PA », de polybutylène téréphtalate, noté « PBT » et/ou de polycarbonate acrylonitrile butadiène styrène, noté « PC-ABS », fournit une résistance thermique et mécanique particulièrement élevée pour un dispositif de refroidissement pour une cellule en sachet.

Par exemple, dans le cadre des configurations décrites dans les présentes, du « PA » permet une résistance mécanique robuste et une bonne isolation électrique entre les électrodes de différentes cellules en sachet alignées l'une avec l'autre et à proximité l'une de l'autre, réduisant le risque de courts-circuits électriques. Dans l'exemple d'une lame électriquement isolante comprenant du « PBT », il est observé que le transfert de chaleur entre les électrodes et les brides métalliques est facilité, ce qui contribue à une dissipation thermique plus efficace. Dans le cas de « PC-ABS », la lame électriquement isolante présente un compromis optimal entre dissipation thermique et résistance mécanique aux chocs, ce qui est particulièrement avantageux pour une utilisation au sein d'un module de batterie électrique pour un véhicule électrique.

De façon avantageuse et selon une réalisation possible, le type de matériau(x) d'interface thermique 3a, 3b, 3c, 3d, 3e, 3f est choisi pour garantir une conductivité thermique maximale. Par exemple, un matériau d'interface thermique se compose d'un adhésif thermiquement conducteur, pouvant être formulé avec ou sans silicone, afin d'assurer à la fois une liaison mécanique et une conductivité thermique optimale. Il peut aussi s'agir d'un adhésif en deux parties intégrant des charges conductrices thermiques.

En outre, un exemple de matériau d'interface thermique adapté peut se présenter sous forme d'une colle thermiquement conductrice ou d'un mastic thermiquement conducteur, à base d'un ou de plusieurs composants activables par l'humidité et contenant des charges conductrices thermiques.

Encore une autre variante de matériau d'interface thermique peut se présenter sous forme d'un tampon ou d'un coussin thermiquement conducteur, également pouvant contenir ou non du silicone. Ce tampon ou ce coussin garantit une conductivité thermique efficace tout en étant adapté à différentes applications.

Les modes de réalisation précédents et les variantes décrites peuvent s'appliquer directement au cas d'un module de batterie électrique 100 comprenant un dispositif de refroidissement 10. En faisant traverser les électrodes respectives de chaque cellule en sachet au travers d'une fente correspondante, chacune de ces électrodes peut être mise en contact avec la première surface d'une bride métallique respective pour permettre un transfert de chaleur.

De façon avantageuse et selon une réalisation possible, une mise en contact de chaque électrode respective avec une première surface de la bride métallique respective peut se faire par pliement ou repliement de cette électrode respective autour de la fente. A titre d'exemple illustratif pour une cellule en sachet 100d, on peut incliner ou fléchir l'une de ses électrodes 4d sur le bord de la fente respective 2d située à proximité de cette cellule en sachet 100d, pour la faire se plier ou se recourber et la mettre en contact avec la bride métallique respective 1d située sur la lame électriquement isolante 11. On réalise ainsi un pli de l'électrode respective 4d sur la première surface de la bride métallique respective 1d, afin de réaliser un ancrage partiel ou total. Ce repliement peut se faire pour toutes les électrodes de chaque cellule en sachet.

De façon avantageuse et selon une réalisation possible, le montage d'une pluralité de cellules en sachet sur une ou plusieurs plaques, par exemple la plaque 110, pouvant être connectée (s) avec un système de refroidissement actif, permet aux brides métalliques 1a, 1b, 1c, 1d, 1e, 1f de la lame électriquement isolante 11 de transférer la chaleur provenant des électrodes des cellules vers des matériaux d'interface thermique 3a, 3b, 3c, 3d, 3e, 3f correspondants sur ces brides métalliques, qui à leur tour sont en contact avec au moins une plaque, permet un refroidissement actif et efficace.

De façon avantageuse et selon une réalisation possible, un refroidissement actif par liquide de la plaque 110 ou des plaques du module de batterie électrique 100 permet de maintenir les électrodes des cellules en sachet à des températures de fonctionnement sûres et optimales. Les modules comprenant ces cellules en sachet et/ou les batteries comprenant ces modules générant de la chaleur lors de la charge, de la décharge et lors de périodes d'utilisation intense, la circulation d'un liquide tel qu'un liquide caloporteur, par exemple un mélange d'eauglycol ou de l'eau déminéralisée, dans des plaques de ces modules ou au contact de telles plaques, permet de fournir un refroidissement actif. Par exemple, un liquide caloporteur circulant à travers des conduits intégrés dans la plaque conductrice permet d'absorber la chaleur transférée par la deuxième surface des brides métalliques 1a, 1b, 1c, 1d, 1e, 1f au moyen des matériaux d'interface thermique 3a, 3b, 3c, 3d, 3e, 3f, puis est dirigé vers un échangeur de chaleur où la chaleur est dissipée. L'application d'un cycle continu permet de maintenir les cellules à des températures appropriées pour assurer un fonctionnement optimal.

De façon avantageuse et selon une réalisation possible, un système de régulation thermique (non représenté) peut être connecté à la plaque 110 ou à toute plaque du module, afin de modifier et/ou réguler la température de cette plaque.

Par exemple, dans le cas d'un module de batterie électrique 100 apte à être utilisé dans un véhicule électrique, un tel système de régulation thermique peut comprendre des capteurs thermiques reliés à la plaque 110. Ces capteurs permettent d'assurer une surveillance constante de la température des cellules en sachet et/ou de communiquer avec un système de contrôle automatisé. En fonction de paramètres préétablis du dispositif de refroidissement 10 et/ou du module de batterie électrique 100, il est ainsi possible d'ajuster avec précision le débit du liquide de refroidissement à travers des conduits intégrables dans la plaque, fournissant ainsi un contrôle dynamique de la température des cellules en fonction des charges, des conditions extérieures et/ou de l'utilisation du véhicule. Cela permet aussi de maintenir les cellules à des niveaux de température souhaités tout en évitant les risques de surchauffe liés aux charges rapides ou à une utilisation intensive du véhicule électrique.

De façon avantageuse et économique, une fabrication simple et rapide du dispositif de refroidissement 10 peut se faire selon différents modes de réalisation. Pour cela, et partant d'un choix d'un matériau isolant adapté pour assurer une isolation électrique entre les électrodes de cellules en sachet, une mise en forme de lames électriquement isolantes peut être mise en œuvre avec une épaisseur et des fentes de tailles aptes à faciliter ensuite la liaison avec des électrodes de cellules en sachet.

Par exemple, un surmoulage de la lame électriquement isolante 11 peut être réalisé au moyen d'un moule d'injection plastique. Un ou plusieurs moules d'injection plastique peuvent être conçus en fonction du type de lame électriquement isolante 11 souhaité. Ce ou ces moules comprennent par exemple des cavités correspondant à la forme des électrodes des cellules en sachet dans le module de batterie électrique. Une injection de plastique liquide dans le moule permet ensuite de former la lame électriquement isolante 11 avec des fentes spécifiques, le plastique injecté étant ensuite refroidi pour solidifier et former la structure de la lame avec les fentes.

Selon un mode de réalisation possible, par répétition de ces étapes, ce procédé de fabrication permet d'obtenir une pluralité de lames électriquement isolantes, sur lesquelles les brides métalliques peuvent être ajoutées. L'assemblage d'une lame électriquement isolante 11 sur une plaque 110 en y reliant les brides métalliques 1a, 1b, 1c, 1d, 1e, 1f peut être mis en œuvre simultanément ou successivement, tandis que le passage des électrodes des cellules en sachet au travers des fentes d'une lame électriquement isolante 11 permet de relier la ou les cellules aux brides métalliques tout en maintenant une isolation électrique fiable. On favorise ainsi un transfert thermique efficace de la chaleur depuis les cellules en sachet vers la plaque tout en préservant l'intégrité électrique des cellules en sachet.

Selon un mode de réalisation possible, une connexion ou une liaison de brides métalliques avec une lame électriquement isolante 11 peut se faire par différents moyens tel qu'une soudure, un brasage, l'utilisation adhésifs ou des attaches mécaniques. Les brides métalliques 1a, 1b, 1c, 1d, 1e, 1f peuvent aussi simplement être mises en contact avec les lames ou être disposées suffisamment proches.

Selon un mode de réalisation possible et de manière avantageuse, la fabrication elle-même des brides métalliques 1a, 1b, 1c, 1d, 1e, 1f se fait de préférence par estampillage, par exemple à partir de feuilles métalliques sélectionnées en fonction de leur épaisseur et de leur résistance mécanique. Un estampillage peut alors être réalisé à l'aide de matrices correspondantes afin de découper précisément ces brides métalliques, par exemple pour garantir des dimensions uniformes en vue de faciliter leur connexion avec un type donné d'électrodes de cellules en sachet.

Ceci permet une fabrication avantageuse en termes de précision dimensionnelle, de rapidité de production et d'intégration des brides métalliques 1a, 1b, 1c, 1d, 1e, 1f dans le dispositif de refroidissement 10.

## Revendications

1. Dispositif de refroidissement (10) pour au moins une cellule (100d) en sachet d'un module de batterie électrique (100), le dispositif de refroidissement (10) comprenant :
- une lame électriquement isolante (11) et munie d'une pluralité de fentes (2a, 2b, 2c, 2d, 2e, 2f, 2g), chaque fente étant conçue pour être traversée par une électrode (4d) respective de l'au moins une cellule en sachet (100d), et
- une pluralité de brides métalliques (1a, 1b, 1c, 1d, 1e, 1f), chaque bride métallique (1a, 1b, 1c, 1d, 1e, 1f) étant disposée entre deux fentes de la pluralité de fentes (2a, 2b, 2c, 2d, 2e, 2f, 2g) et comprenant, d'une part, une première surface adaptée pour être en contact avec l'électrode (4d) traversant la fente respective et, d'autre part, au moins une deuxième surface recouverte par un matériau d'interface thermique (3a, 3b, 3c, 3d, 3e, 3f), le matériau d'interface thermique (3a, 3b, 3c, 3d, 3e, 3f) étant adapté pour relier thermiquement la deuxième surface de la bride métallique (1a, 1b, 1c, 1d, 1e, 1f) à au moins une plaque (110) du module de batterie électrique (100), ladite plaque (110) étant apte à être thermiquement régulée de façon active.

2. Dispositif de refroidissement (10) selon la revendication 1, dans lequel la première surface de l'une au moins des brides métalliques (1a, 1b, 1c, 1d, 1e, 1f) est comprise entre 50 millimètres carrés et 2000 millimètres carrés et/ou dans lequel la deuxième surface de l'une au moins des brides métalliques (1a, 1b, 1c, 1d, 1e, 1f) est comprise entre 30 millimètres carrés et 2000 millimètres carrés.

3. Dispositif de refroidissement (10) selon l'une des revendications 1 ou 2, dans lequel au moins l'une des brides métalliques (1a, 1b, 1c, 1d, 1e, 1f) présente une forme en L.

4. Dispositif de refroidissement (10) selon l'une des revendications 1 ou 2, dans lequel au moins l'une des brides métalliques (1a, 1b, 1c, 1d, 1e, 1f) présente une forme en C.

5. Dispositif de refroidissement (10) selon l'une des revendications 1 ou 2, dans lequel au moins l'une des brides métalliques (1a, 1b, 1c, 1d, 1e, 1f) présente une forme en U.

6. Dispositif de refroidissement (10) selon l'une quelconque des revendications précédentes, dans lequel la lame électriquement isolante (11) est formée partiellement ou totalement d'un matériau choisi parmi du polypropylène, du polyéthylène, de la céramique, un polymère renforcé en fibre de verre, un matériau thermoplastique, un matériau composite thermoplastique, du polyamide, du polybutylène téréphtalate et/ou du polycarbonate acrylonitrile butadiène styrène.

7. Dispositif de refroidissement (10) selon l'une quelconque des revendications précédentes, dans lequel le matériau d'interface thermique est choisi parmi un adhésif thermoconducteur sans silicone, un adhésif thermoconducteur comprenant du silicone, un adhésif comprenant une charge thermoconductrice, un mastic thermoconducteur sans silicone, un mastic thermoconducteur comprenant du silicone, un adhésif monocomposant à durcissement sans charge thermoconductrice, un adhésif bicomposant à durcissement sans charge thermoconductrice, un adhésif monocomposant à durcissement comprenant au moins une charge thermoconductrice, un adhésif bicomposant à durcissement comprenant au moins une charge thermoconductrice, un tampon thermoconducteur sans silicone et/ou un tampon thermoconducteur comprenant du silicone.

8. Dispositif de refroidissement (10) selon l'une quelconque des revendications précédentes, dans lequel au moins deux des fentes (2a, 2b, 2c, 2d, 2e, 2f, 2g) de la lame électriquement isolante (11) comprennent chacune une ouverture de forme sensiblement rectangulaire, les au moins deux fentes étant parallèles l'une à l'autre.

9. Module de batterie électrique (100) comprenant le dispositif de refroidissement (10) selon l'une quelconque des revendications précédentes, le module de batterie électrique (100) comprenant en outre l'au moins une cellule en sachet (100d) et l'au moins une plaque (110), dans lequel au moins une fente (2a, 2b, 2c, 2d, 2e, 2f, 2g) de la lame électriquement isolante (11) est traversée par l'électrode respective (4d) de l'au moins une cellule en sachet (100d), l'électrode respective (4d) étant en contact avec la première surface d'une bride métallique respective (1d) parmi la pluralité de brides métalliques (1a, 1b, 1c, 1d, 1e, 1f), l'au moins une deuxième surface de la bride métallique respective (1d) étant recouverte par le matériau d'interface thermique (3d), le matériau d'interface thermique (3d) reliant thermiquement la deuxième surface de la bride métallique respective (1d) à l'au moins une plaque (110), l'au moins une plaque (110) étant apte à être thermiquement régulée de façon active.

10. Module de batterie électrique (100) selon la revendication 9, dans lequel la mise en contact de l'électrode respective (4d) avec la première surface de la bride métallique respective (1d) est mise en œuvre par un pliement de l'électrode respective (4d) autour d'une fente respective (2d) parmi l'au moins une fente (2a, 2b, 2c, 2d, 2e, 2f, 2g) de la lame électriquement isolante (11), le pli de l'électrode respective (4d) étant partiellement ou totalement ancrée sur la première surface de la bride métallique respective (1d).

11. Batterie électrique destinée à être intégrée dans un véhicule automobile électrique, ladite batterie électrique comprenant un module de batterie électrique (100) selon l'une quelconque des revendications 9 à 10 et un système de régulation thermique connecté à l'au moins une plaque (110) du module, ledit système de régulation thermique étant apte à modifier la température de ladite au moins plaque de sorte à réguler la température des cellules en sachet (100d) du module de batterie électrique (100).

12. Procédé de fabrication du dispositif selon l'une quelconque des revendications 1 à 8, dans lequel la lame électriquement isolante (11) est obtenue par un surmoulage mis en œuvre au moyen d'un moule d'injection plastique.

13. Procédé de fabrication du dispositif selon la revendication 12, dans lequel au moins l'une des brides métalliques (1a, 1b, 1c, 1d, 1e, 1f) est obtenue par un estampillage.

## Patentansprüche

1. Kühlvorrichtung (10) für mindestens eine Pouchzelle (100d) eines elektrischen Batteriemoduls (100), wobei die Kühlvorrichtung (10) umfasst:
- eine elektrisch isolierende Lamelle (11), die mit einer Vielzahl von Schlitzen (2a, 2b, 2c, 2d, 2e, 2f, 2g) versehen ist, wobei jeder Schlitz dafür ausgelegt ist, von einer jeweiligen Elektrode (4d) der mindestens einen Pouchzelle (100d) durchquert zu werden, und
- eine Vielzahl von Metalllaschen (1a, 1b, 1c, 1d, 1e, 1f), wobei jede Metalllasche (1a, 1b, 1c, 1d, 1e, 1f) zwischen zwei Schlitzen aus der Vielzahl von Schlitzen (2a, 2b, 2c, 2d, 2e, 2f, 2g) angeordnet ist und einerseits eine erste Oberfläche, die angepasst ist, um mit der Elektrode (4d), die den jeweiligen Schlitz durchquert, in Kontakt zu stehen, und andererseits mindestens eine zweite Oberfläche umfasst, die von einem thermischen Schnittstellenmaterial (3a, 3b, 3c, 3d, 3e, 3f) bedeckt ist, wobei das thermische Schnittstellenmaterial (3a, 3b, 3c, 3d, 3e, 3f) angepasst ist, um die zweite Oberfläche der Metalllasche (1a, 1b, 1c, 1d, 1e, 1f) thermisch mit mindestens einer Platte (110) des elektrischen Batteriemoduls (100) zu verbinden, wobei die Platte (110) dazu geeignet ist, aktiv thermisch geregelt zu werden.

2. Kühlvorrichtung (10) nach Anspruch 1, wobei die erste Oberfläche mindestens einer der Metalllaschen (1a, 1b, 1c, 1d, 1e, 1f) zwischen 50 Quadratmillimetern und 2000 Quadratmillimetern beträgt und/oder wobei die zweite Oberfläche mindestens einer der Metalllaschen (1a, 1b, 1c, 1d, 1e, 1f) zwischen 30 Quadratmillimetern und 2000 Quadratmillimetern beträgt.

3. Kühlvorrichtung (10) nach einem der Ansprüche 1 oder 2, wobei mindestens eine der Metalllaschen (1a, 1b, 1c, 1d, 1e, 1f) eine L-Form aufweist.

4. Kühlvorrichtung (10) nach einem der Ansprüche 1 oder 2, wobei mindestens eine der Metalllaschen (1a, 1b, 1c, 1d, 1e, 1f) eine C-Form aufweist.

5. Kühlvorrichtung (10) nach einem der Ansprüche 1 oder 2, wobei mindestens eine der Metalllaschen (1a, 1b, 1c, 1d, 1e, 1f) eine U-Form aufweist.

6. Kühlvorrichtung (10) nach einem der vorstehenden Ansprüche, wobei die elektrisch isolierende Lamelle (11) teilweise oder vollständig aus einem Material gebildet ist, das ausgewählt ist aus Polypropylen, Polyethylen, Keramik, einem glasfaserverstärkten Polymer, einem thermoplastischen Material, einem thermoplastischen Verbundmaterial, Polyamid, Polybutylenterephthalat und/oder Polycarbonat-Acrylnitril-Butadien-Styrol.

7. Kühlvorrichtung (10) nach einem der vorstehenden Ansprüche, wobei das thermische Schnittstellenmaterial ausgewählt ist aus einem silikonfreien wärmeleitfähigen Klebstoff, einem silikonhaltigen wärmeleitfähigen Klebstoff, einem Klebstoff mit einem wärmeleitfähigen Füllstoff, einem silikonfreien wärmeleitfähigen Kitt, einem silikonhaltigen wärmeleitfähigen Kitt, einem aushärtenden Einkomponenten-Klebstoff ohne wärmeleitfähigen Füllstoff, einem aushärtenden Zweikomponenten-Klebstoff ohne wärmeleitfähigen Füllstoff, einem aushärtenden Einkomponenten-Klebstoff mit mindestens einem wärmeleitfähigen Füllstoff, einem aushärtenden Zweikomponenten-Klebstoff mit mindestens einem wärmeleitfähigen Füllstoff, einem silikonfreien wärmeleitfähigen Pad und/oder einem silikonhaltigen wärmeleitfähigen Pad.

8. Kühlvorrichtung (10) nach einem der vorstehenden Ansprüche, wobei mindestens zwei der Schlitze (2a, 2b, 2c, 2d, 2e, 2f, 2g) der elektrisch isolierenden Lamelle (11) jeweils eine im Wesentlichen rechteckige Öffnung umfassen, wobei die mindestens zwei Schlitze parallel zueinander sind.

9. Elektrisches Batteriemodul (100), umfassend die Kühlvorrichtung (10) nach einem der vorstehenden Ansprüche, wobei das elektrische Batteriemodul (100) ferner die mindestens eine Pouchzelle (100d) und die mindestens eine Platte (110) umfasst, wobei mindestens ein Schlitz (2a, 2b, 2c, 2d, 2e, 2f, 2g) der elektrisch isolierenden Lamelle (11) von der jeweiligen Elektrode (4d) der mindestens einen Pouchzelle (100d) durchquert wird, wobei die jeweilige Elektrode (4d) mit der ersten Oberfläche einer jeweiligen Metalllasche (1d) aus der Vielzahl von Metalllaschen (1a, 1b, 1c, 1d, 1e, 1f) in Kontakt steht, wobei die mindestens eine zweite Oberfläche der jeweiligen Metalllasche (1d) von dem thermischen Schnittstellenmaterial (3d) bedeckt ist, wobei das thermische Schnittstellenmaterial (3d) die zweite Oberfläche der jeweiligen Metalllasche (1d) thermisch mit der mindestens einen Platte (110) verbindet, wobei die mindestens eine Platte (110) dazu geeignet ist, aktiv thermisch geregelt zu werden.

10. Elektrisches Batteriemodul (100) nach Anspruch 9, wobei das Inkontaktbringen der jeweiligen Elektrode (4d) mit der ersten Oberfläche der jeweiligen Metalllasche (1d) durch eine Faltung der jeweiligen Elektrode (4d) um einen jeweiligen Schlitz (2d) von dem mindestens einen Schlitz (2a, 2b, 2c, 2d, 2e, 2f, 2g) der elektrisch isolierenden Lamelle (11) umgesetzt wird, wobei die Falte der jeweiligen Elektrode (4d) teilweise oder vollständig auf der ersten Oberfläche der jeweiligen Metalllasche (1d) verankert ist.

11. Elektrische Batterie zum Integrieren in ein elektrisches Kraftfahrzeug, wobei die elektrische Batterie ein elektrisches Batteriemodul (100) nach einem der Ansprüche 9 bis 10 und ein Wärmeregulierungssystem umfasst, das mit mindestens einer Platte (110) des Moduls verbunden ist, wobei das Wärmeregulierungssystem dazu geeignet ist, die Temperatur der mindestens einen Platte zu verändern, um die Temperatur der Pouchzellen (100d) des elektrischen Batteriemoduls (100) zu regeln.

12. Verfahren zum Herstellen der Vorrichtung nach einem der Ansprüche 1 bis 8, wobei die elektrisch isolierende Lamelle (11) durch eine Umspritzung erhalten wird, die mittels einer Kunststoffspritzgussform umgesetzt wird.

13. Verfahren zum Herstellen der Vorrichtung nach Anspruch 12, wobei mindestens eine der Metalllaschen (1a, 1b, 1c, 1d, 1e, 1f) durch Stanzen erhalten wird.

## Claims

1. Cooling device (10) for at least one pouch cell (100d) of an electric battery module (100), the cooling device (10) comprising:
- an electrically insulating strip (11) provided with a plurality of slots (2a, 2b, 2c, 2d, 2e, 2f, 2g), each slot being designed for a respective electrode (4d) of the at least one pouch cell (100d) to pass therethrough, and
- a plurality of metal flanges (1a, 1b, 1c, 1d, 1e, 1f), each metal flange (1a, 1b, 1c, 1d, 1e, 1f) being arranged between two slots of the plurality of slots (2a, 2b, 2c, 2d, 2e, 2f, 2g) and comprising a first surface suitable for being in contact with the electrode (4d) passing through the respective slot, and comprising at least one second surface covered by a thermal interface material (3a, 3b, 3c, 3d, 3e, 3f), the thermal interface material (3a, 3b, 3c, 3d, 3e, 3f) being suitable for thermally connecting the second surface of the metal flange (1a, 1b, 1c, 1d, 1e, 1f) to at least one plate (110) of the electric battery module (100), said plate (110) being capable of being actively thermally regulated.

2. Cooling device (10) according to claim 1, wherein the first surface of at least one of the metal flanges (1a, 1b, 1c, 1d, 1e, 1f) is between 50 square millimeters and 2000 square millimeters and/or wherein the second surface of at least one of the metal flanges (1a, 1b, 1c, 1d, 1e, 1f) is between 30 square millimeters and 2000 square millimeters.

3. Cooling device (10) according to one of claims 1 or 2, wherein at least one of the metal flanges (1a, 1b, 1c, 1d, 1e, 1f) is L-shaped.

4. Cooling device (10) according to one of claims 1 or 2, wherein at least one of the metal flanges (1a, 1b, 1c, 1d, 1e, 1f) is C-shaped.

5. Cooling device (10) according to one of claims 1 or 2, wherein at least one of the metal flanges (1a, 1b, 1c, 1d, 1e, 1f) is U-shaped.

6. Cooling device (10) according to any one of the preceding claims, wherein the electrically insulating strip (11) is formed partly or wholly of a material selected from polypropylene, polyethylene, ceramic, glass fiber reinforced polymer, thermoplastic material, thermoplastic composite material, polyamide, polybutylene terephthalate and/or polycarbonate acrylonitrile butadiene styrene.

7. Cooling device (10) according to any one of the preceding claims, wherein the thermal interface material is selected from a silicone-free thermally conductive adhesive, a thermally conductive adhesive comprising silicone, an adhesive comprising a thermally conductive filler, a silicone-free thermally conductive mastic, a thermally conductive mastic comprising silicone, a one-part curing adhesive without thermally conductive filler, a two-part curing adhesive without thermally conductive filler, a one-part curing adhesive comprising at least one thermally conductive filler, a two-part curing adhesive comprising at least one thermally conductive filler, a silicone-free thermally conductive pad and/or a thermally conductive pad comprising silicone.

8. Cooling device (10) according to any one of the preceding claims, wherein at least two of the slots (2a, 2b, 2c, 2d, 2e, 2f, 2g) of the electrically insulating strip (11) each comprise an opening of substantially rectangular shape, the at least two slots being parallel to one another.

9. Electric battery module (100) comprising the cooling device (10) according to any one of the preceding claims, the electric battery module (100) further comprising the at least one pouch cell (100d) and the at least one plate (110), wherein the respective electrode (4d) of the at least one pouch cell (100d) passes through at least one slot (2a, 2b, 2c, 2d, 2e, 2f, 2g) of the electrically insulating strip (11), the respective electrode (4d) being in contact with the first surface of a respective metal flange (1d) of the plurality of metal flanges (1a, 1b, 1c, 1d, 1e, 1f), the at least one second surface of the respective metal flange (1d) being covered by the thermal interface material (3d), the thermal interface material (3d) thermally connecting the second surface of the respective metal flange (1d) to the at least one plate (110), the at least one plate (110) being capable of being actively thermally regulated.

10. Electric battery module (100) according to claim 9, wherein the respective electrode (4d) is brought into contact with the first surface of the respective metal flange (1d) by bending the respective electrode (4d) around a respective slot (2d) of the at least one slot (2a, 2b, 2c, 2d, 2e, 2f, 2g) of the electrically insulating strip (11), the bend of the respective electrode (4d) being partially or totally anchored to the first surface of the respective metal flange (1d).

11. Electric battery for integration in an electric motor vehicle, said electric battery comprising an electric battery module (100) according to any one of claims 9 to 10 and a thermal regulation system connected to the at least one plate (110) of the module, said thermal regulation system being capable of modifying the temperature of said at least one plate so as to regulate the temperature of the pouch cells (100d) of the electric battery module (100).

12. Method for producing the device according to any one of claims 1 to 8, wherein the electrically insulating strip (11) is obtained by overmolding implemented by means of a plastic injection mold.

13. Method for producing the device according to claim 12, wherein at least one of the metal flanges (1a, 1b, 1c, 1d, 1e, 1f) is obtained by stamping.
